# EUROPÄISCHE PATENTANMELDUNG

(11) **EP 2 075 594 A2**
(43) Veröffentlichungstag der Anmeldung: **01.07.2009**
(21) Anmeldenummer: 08022498.3
(22) Anmeldetag: 29.12.2008
(51) Int. Cl.: G01S 15/04

(54) **Molcherkennungsvorrichtung und Molcherkennungsverfahren**

(30) Priorität: 27.12.2007 DE 102007062782
(71) Anmelder: SONOTEC Dr. zur Horst-Meyer und Münch OHG, 06112 Halle (DE)
(72) Erfinder: Münch, Hans-Joachim, 06130 Halle (DE); zur Horst-Meyer, Santer, Dr., 06120 Halle (DE); Fritsche, Tobias, Dr., 06114 Halle (DE); Kobitsch-Meyer, Stefan, 06114 Halle (DE)
(74) Vertreter: Lindner, Manfred Klaus

(57) **Zusammenfassung**

Die vorliegende Erfindung betrifft eine Molcherkennungsvorrichtung (B) mit einem Näherungsdetektor (A), enthaltend einen Sensor (C), der zum Erzeugen und Empfangen von Ultraschall nach dem Impuls-Echo-Verfahren ausgelegt ist und dem eine Auswerteelektronik (D) zugeordnet ist, wobei die Auswerteelektronik (D) Signalformerkennungseinrichtungen (Mikrocontrollereinheit 1) für empfangene Ultraschallsignale und Ausgabeeinrichtungen (Mikrocontrollereinheit 1, 7) enthält, um beim Auftreten einer vorgegebenen Signalform, beim Abweichen von einer vorgegebenen Signalform und/oder bei einer Änderung der Übereinstimmung mit oder des Abweichens von einer vorgegebenen Signalform ein Mitteilungssignal auszugeben. Ferner betrifft die vorliegende Erfindung ein Molcherkennungsverfahren mit einem Näherungsdetektionsverfahren, wobei mit einem Sensor (C) Ultraschall erzeugt und empfangen wird (Impuls-Echo-Verfahren), und wobei die Signalform von empfangenen Ultraschallsignalen ermittelt und erkannt wird, und beim Auftreten einer vorgegebenen Signalform, beim Abweichen von einer vorgegebenen Signalform und/oder bei einer Änderung der Übereinstimmung mit oder des Abweichens von einer vorgegebenen Signalform ein Mitteilungssignal ausgegeben wird.

## Beschreibung

Die vorliegende Erfindung betrifft eine Molcherkennungsvorrichtung sowie ein Molcherkennungsverfahren.

Die DE 43 20 039 A1 offenbart ein Verfahren und eine Vorrichtung zum Feststellen der Anwesenheit und/oder zum Messen der Eigenschaften fester oder flüssiger Stoffe in einem Raum zwischen sich gegenüber stehenden Wänden oder Wandabschnitten. Von der Außenseite der einen Wand oder des einen Wandabschnittes aus wird ein Schallsignal in den Raum gesendet. Das Schallsignal hat eine Frequenz, bei der die Unterschiede in der Schallgeschwindigkeit und/oder der Schalldämpfung bei Gasen und flüssigen oder festen Stoffen groß sind. Es werden die von der diametral gegenüber liegenden Wand oder dem Wandabschnitt reflektierten Schallwellen oder die durch die diametral gegenüber liegende Wand oder den Wandabschnitt hindurch tretenden Schallwellen mittels eines Schalldetektors empfangen und ausgewertet.

Aus der DE 20 2004 009 637 U1 ist eine Vorrichtung zur Überwachung der Position eines in einem druckbeaufschlagten Zylinder bewegbaren Kolbens mittels außerhalb des Zylinders angebrachter Ultraschallsensoren für den Impuls-Echo-Betrieb, wobei die Ultraschallsensoren in Segmente unterteilt sind, auf der der Zylinderwand zugewandten Seite anformbare Flächen besitzen und vollflächig an der Zylinderwand anliegen, wozu beispielsweise Spezialkoppelkleber benötigt wird.

Weiterhin ist aus der US 5,463,596 ein berührungslos arbeitender Ultraschall-Näherungsdetektor für einen fluidbetätigten Zylinder bekannt, in dem ein Kolben innerhalb der Zylinderbohrung hin und her geht. Ein Ultraschallwandler, der an der Außenseite der Zylinderwand montiert ist, erzeugt selektiv ein Ultraschallausgangssignal, das durch den Zylinder gerichtet ist. Der Wandler empfängt dann jegliches gewünschte Ultraschallsignal, das durch Ausbreitung des Ultraschallausgangssignals erzeugt wird. Eine Steuerschaltung verarbeitet elektrische Signale, die beim Ultraschallwandler durch das sich ausbreitende Ultraschallsignal erzeugt wird, um die Anwesenheit oder Abwesenheit des Kolbens anzugeben.

Die Steuerschaltung bestimmt, ob der Kolben vorhanden ist, durch Vergleichen eines Signalpegels in dem empfangenen Ultraschallsignal während eines Abtastzeitfensters, in welchem das erwünschte Signal mit einem vorgegebenen Schwellenwertpegel erwartet wird. Um diese Funktion auszuführen, werden elektrische Signale, die beim Wandler durch das sich ausbreitende Ultraschallsignal erzeugt werden, zuerst an einen Verstärker gegeben, der eine ausgewählte Verstärkung hat. Eine Ausgabe des Verstärkers wird dann einer Detektorschaltung zugeführt, die ein Detektionspegelsignal erzeugt, das für Energie repräsentativ sein kann, die in dem empfangenen Ultraschallsignal während des Abtastzeitfensters vorhanden ist. Vergleichseinrichtungen führen dann einen Vergleich des Detektionssignals mit dem Schwellenwert durch.

Nachteile dieses Standes der Technik ergeben sich daraus, dass bei diesem Stand der Technik in allen Fällen das verstärkte Signal mit einem voreingestellten Schwellwert (Trigger) verglichen wird. Es wird stets der Pegel des empfangenen Signals betrachtet, wodurch es bei minderer Qualität der Ankopplung (zuviel Koppelmittel, zuwenig Koppelmittel, Sensor nicht ausreichend angezogen) zu erheblichen Messfehlern kommen kann. Durch mindere Qualität der Ankopplung kommt es zu einem Empfindlichkeitsverlust, der entweder gar nicht, oder nur durch Nachregeln des Verstärkers kompensiert werden kann. Des weiteren ist eine Unterscheidung zwischen verschiedenen Zuständen (z.B. Gas oder Flüssigkeit) nur dann möglich, wenn die Signalpegel beider Zustände weit genug auseinander liegen (Signaldynamik). Da dies bei Wandstärken von einigen Millimetern (> 10 mm, Kolbenspeicher und Hydraulikzylinder, Pipelinerohre und Behälter) nicht mehr der Fall ist (Dynamik ca. 5 - 8 dB), ist eine Unterscheidung beider Zustände nach diesem Stand der Technik nicht mehr mit ausreichenden Sicherheit möglich. Zudem wirkt sich ein Temperaturgefälle negativ auf die Empfindlichkeit aus, da sich das Signal beim Zustand "Flüssigkeit", wie z.B. Öl oder Wasser, verschlechtert, und bei Zustand Gas gleich bleibt. Dies macht eine Auswertung an dem Messort und bei der besagten Wandstärke nach diesem Stand der Technik nahezu unmöglich.

Auch das Messen der Schallgeschwindigkeit beispielsweise, wird durch die Pegelauswertung ungenau, da durch Empfindlichkeitsschwankungen nicht immer auf der gleiche Halbwelle getriggert werden kann, und somit Ungenauigkeiten auftreten können.

Die vorliegende Erfindung hat und erreicht das Ziel, einen Molchdetektor und ein Näherungsdetektionsverfahren zur Molchdetektion an Flüssigkeitspipelines zu schaffen, die gegenüber dem Stand der Technik genauer arbeiten. Insbesondere haben die Molcherkennungsvorrichtung sowie das Molcherkennungsverfahren gemäß der vorliegenden Erfindung die weiteren Vorteile, dass sie bezüglich dem jeweiligen Stand der Technik stabiler arbeiten und gleichzeitig unabhängiger von wichtigen Randparametern, wie z.B. die Qualität der Ankopplung und die Signaldynamik, sind.

Die Erfindung schafft dementsprechend eine Molcherkennungsvorrichtung nach dem Anspruch 3 und ein Molcherkennungsverfahren nach dem Anspruch 7.

Durch die Signalformerkennung spielt die Qualität der Ankopplung eine untergeordnete Rolle, da sich bei minderer Qualität der Ankopplung der Pegel verringert, die Form des Signals aber gleich bleibt.

Vorzugsweise ist bei der Molcherkennungsvorrichtung ferner vorgesehen, dass die Signalformerkennungseinrichtungen enthalten
einen Hüllkurvengenerator, mittels dem eine Hüllkurve eines empfangenen Ultraschallsignals erzeugt wird, und Vergleichseinrichtungen, mittels denen die Signalform der Hüllkurve eines empfangenen Ultraschallsignals mit einer Referenz verglichen wird, und
dass die Ausgabeeinrichtungen ausgelegt sind, ein Mitteilungssignal auszugeben, wenn mittels der Vergleichseinrichtungen eine Übereinstimmung der Signalform der Hüllkurve eines empfangenen Ultraschallsignals mit der Referenz, eine Abweichung der Signalform der Hüllkurve eines empfangenen Ultraschallsignals von der Referenz oder eine Änderung des Unterschiedes zwischen der Signalform der Hüllkurve eines empfangenen Ultraschallsignals und der Referenz festgestellt wird.

Eine weitere bevorzugte Ausgestaltung besteht darin, dass der Sensor als Kompaktsensoreinheit zur Montage außen an einem Zylinder, Rohr, Tank oder Behälter ausgeführt ist und zum Einsatz ohne Kontakt zu einem Medium vorgesehen ist. Dies kann dadurch mit Vorteil weitergebildet sein, dass die Kompaktsensoreinheit mittels Schellenbefestigung oder flexiblen Befestigungseinrichtungen, wie z.B. eine Federkopplung, und Spezialkoppelmittel an einem Zylinder, Rohr, Tank oder Behälter montierbar ist.

Ferner kann mit Vorzug vorgesehen sein, dass der Sensor zur indirekten Kolben- oder Molcherkennung und/oder zur Grenzstandskontrolle an einem Zylinder, Rohr oder Behälter oder an Tanks ausgelegt ist. Alternativ oder zusätzlich ist es bevorzugt, wenn der Sensor und ggf. die Kompaktsensoreinheit über einen internen einstellbaren Verstärker mit anschließendem Hüllkurvengenerator und ADC verfügt, um davon das digitalisierte Ultraschallsignal einem Mikrocontroller, insbesondere in Form einer Mikrocontrollereinheit zuzuführen, wobei insbesondere der Mikrocontroller ausgelegt sein kann, alle Abläufe und auch die Einstellung des Verstärkers zu steuern.

Vorzugsweise können die Signalformerkennungseinrichtungen und ggf. deren Vergleichseinrichtungen in einem Mikrocontroller, wie einer Mikrocontrollereinheit enthalten sein.

Weiterhin ist es bevorzugt, wenn dass die Signalformerkennungseinrichtungen und ggf. deren Vergleichseinrichtungen für die Auswertung der Form des empfangenen Ultraschallsignals und zum Erkennen einer charakteristischen Signalform der Hüllkurve des empfangenen Ultraschallsignals ausgelegt sind, welche Signalform der Hüllkurve des empfangenen Ultraschallsignals nur bei der Anwesenheit von einer Flüssigkeit oder einem Kolben oder Molch entsteht. In Weiterbildung davon kann vorgesehen sein, dass die Signalformerkennungseinrichtungen und ggf. deren Vergleichseinrichtungen ausgelegt sind, die charakteristische Signalform der Hüllkurve des Ultraschallsignals in Verbindung mit einem Referenzsignal zu identifizieren.

Es kann auch mit Vorzug vorgesehen sein, dass die Auswerteelektronik ausgelegt ist, anhand einer Signalformveränderung eine Zustandsänderung zu detektieren und in Abhängigkeit davon einen Schaltausgang anzusteuern, um die Änderung zu signalisieren.

Die Erfindung schafft ferner ein Molcherkennungsverfahren mit einem Näherungsdetektionsverfahren, wobei mit einem Sensor Ultraschall nach dem Impuls-Echo-Verfahren erzeugt und empfangen wird, und wobei die Signalform von Hüllkurven von empfangenen Ultraschallsignalen ermittelt und erkannt wird, und beim Auftreten einer vorgegebenen Signalform, beim Abweichen von einer vorgegebenen Signalform und/oder bei einer Änderung der Übereinstimmung mit oder des Abweichens von einer vorgegebenen Signalform ein Mitteilungssignal ausgegeben wird.

In Weiterbildung davon ist mit Vorzug vorgesehen, dass die Signalformerkennung erfolgt mit
einem Hüllkurvengenerator, mittels dem eine Signalform der Hüllkurve eines empfangenen Ultraschallsignals erzeugt wird, und
Vergleichseinrichtungen, mittels denen die Signalform der Hüllkurve eines empfangenen Ultraschallsignals mit einer Referenz verglichen wird, und
dass ein Mitteilungssignal ausgegeben wird, wenn mittels der Vergleichseinrichtungen eine Übereinstimmung der Signalform der Hüllkurve eines empfangenen Ultraschallsignals mit der Referenz, eine Abweichung der Signalform der Hüllkurve eines empfangenen Ultraschallsignals von der Referenz oder eine Änderung des Unterschiedes zwischen der Signalform der Hüllkurve eines empfangenen Ultraschallsignals und der Referenz festgestellt wird.

Vorzugsweise ist der Sensor als Kompaktsensoreinheit zur Montage außen an einem Zylinder, Tank, Rohr oder Behälter ausgeführt und zum Einsatz ohne Kontakt zu einem Medium vorgesehen, wobei insbesondere die Kompaktsensoreinheit mittels Schellenbefestigung oder flexiblen Befestigungseinrichtungen, wie z.B. eine Federkopplung, und Spezialkoppelmittel an einem Zylinder, Tank, Rohr oder Behälter montiert wird.

Ferner besteht eine bevorzugte Ausgestaltung darin, dass mittels des Sensors eine indirekte Kolben- oder Molcherkennung und/oder eine Grenzstandskontrolle an einem Zylinder, Rohr oder Behälter oder an Tanks erfolgt. Alternativ oder zusätzlich kann vorgesehen sein, dass der Sensor und ggf. die Kompaktsensoreinheit über einen internen einstellbaren Verstärker mit anschließendem Hüllkurvengenerator und ADC verfügt und davon das digitalisierte Ultraschallsignal einem Mikrocontroller zuführt, wobei insbesondere ferner der Mikrocontroller alle Abläufe und auch die Einstellung des Verstärkers steuert.

Noch eine andere bevorzugte Ausgestaltung besteht darin, dass die Signalformerkennungseinrichtungen und ggf. deren Vergleichseinrichtungen in einem Mikrocontroller enthalten sind.

Weiterhin ist es besonders bevorzugt, wenn die Auswertung der Signalform der Hüllkurve des empfangenen Ultraschallsignals und das Erkennen einer charakteristischen Signalform der Hüllkurve des empfangenen Ultraschallsignals mittels den Signalformerkennungseinrichtungen und ggf. deren Vergleichseinrichtungen erfolgt, wobei noch weiter insbesondere die Signalformerkennungseinrichtungen und ggf. deren Vergleichseinrichtungen ausgelegt sind, die charakteristische Signalform der Hüllkurve des Ultraschallsignals in Verbindung mit einem Referenzsignal zu identifizieren.

Es kann auch mit Vorzug vorgesehen sein, dass die Auswerteelektronik ausgelegt ist, anhand einer Signalformveränderung eine Zustandsänderung zu detektieren und in Abhängigkeit davon einen Schaltausgang anzusteuern, um die Änderung zu signalisieren.

Weitere bevorzugte und/oder vorteilhafte Ausgestaltungen der Erfindung ergeben sich aus den Ansprüchen und deren Kombinationen sowie den gesamten vorliegenden Anmeldungsunterlagen.

Die Erfindung wird anhand von Ausführungsbeispielen nachfolgend unter Bezugnahme auf die Zeichnung lediglich exemplarisch näher erläutert, in der
- Fig. 1: ein Ausführungsbeispiel eines Näherungsdetektors einer erfindungsgemäßen Kolben- oder Molcherkennungsvorrichtung in der Form eines Kompaktsensors in einer schematischen Prinzipskizze von der Seite zeigt,
- Fig. 2: ein Ausführungsbeispiel eines wesentlichen Teils des Näherungsdetektors der erfindungsgemäßen Kolben- oder Molcherkennungsvorrichtung aus der Fig. 1 in einer schematischen prinzipiellen Schaltungsdarstellung verdeutlicht,
- Fig. 3: ein Ausführungsbeispiel der Erfindung mit exemplarisch der Form eines Echosignals beim Zustand "Medium" darstellt,
- Fig. 4: eine schematische Darstellung eines Ausführungsbeispiels von flexiblen Befestigungseinrichtungen für einen Näherungsdetektor der erfindungsgemäßen Kolben- oder Molcherkennungsvorrichtung an einem Behälter, und
- Fig. 5: eine schematische Darstellung eines Ausführungsbeispiels einer Befestigungsplatte zum Anbringen eines Näherungsdetektors der erfindungsgemäßen Kolben- oder Molcherkennungsvorrichtung über eine Dämpfungslage an einem Behälter.

Anhand der nachfolgend beschriebenen und in der Zeichnung dargestellten Ausführungs- und Anwendungsbeispiele wird die Erfindung lediglich exemplarisch näher erläutert, d.h. sie ist nicht auf diese Ausführungs- und Anwendungsbeispiele oder auf die jeweiligen Merkmalskombinationen innerhalb einzelner Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Als eine bevorzugte Ausgestaltung der Erfindung wird nachfolgend näher auf eine Kolbenerkennungsvorrichtung mit einem Näherungsdetektor eingegangen. Die Kolbenerkennungsvorrichtung enthält als ein Kolbenerkennungsgerät einen Sensor, wie insbesondere einen Kompaktsensor, der für die berührungslose Erkennung von Kolben in Kolbenspeichern und Hydraulikzylindern von außen durch eine Zylinderwand, d.h. nicht medienberührend, entwickelt wurde. Soweit auf andere Anwendungsmöglichkeiten der betroffen Technologie Bezug genommen wird, ist dies für die grundsätzliche Molcherkennung zwar nicht hinderlich und ist dem Verständnis der Technologie zur Molcherkennung dienlich, konkrete Einzelheiten sind aber für die Erfindung zum Zwecke der Molcherkennung nicht relevant.

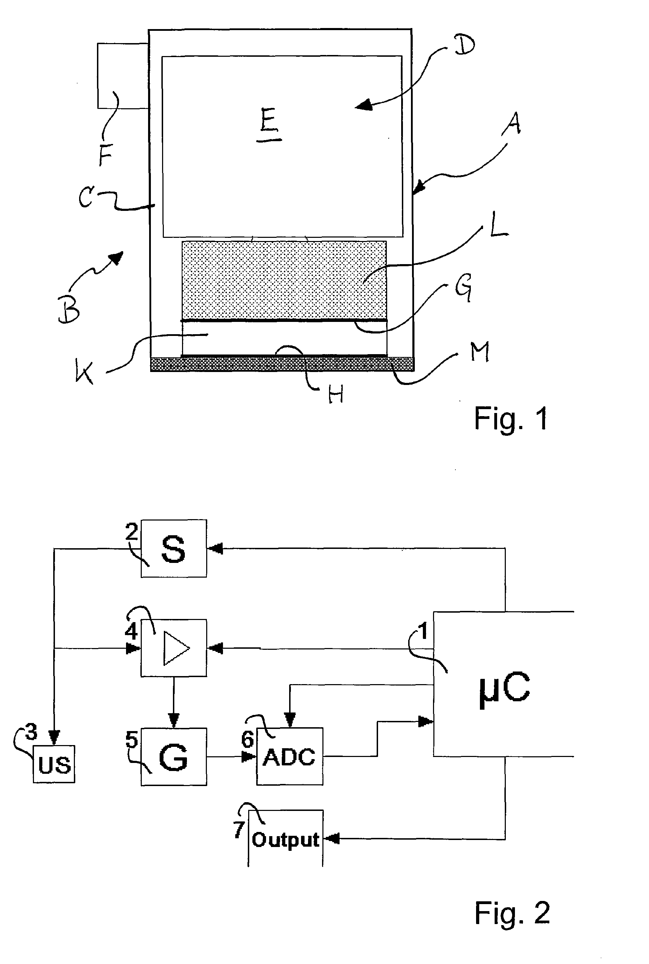

Lediglich exemplarisch zeigen die Fig. 1 ein Ausführungsbeispiel eines erfindungsgemäßen Näherungsdetektors A einer Kolbenerkennungsvorrichtung B in der Form eines Kompaktsensors C in einer schematischen Prinzipskizze von der Seite und die Fig. 2 ein Ausführungsbeispiel eines wesentlichen Teils des erfindungsgemäßen Näherungsdetektors A aus der Fig. 1 in einer schematischen prinzipiellen Schaltungsdarstellung.

Im Hinblick auf die Bewertung eines von dem Kompaktsensor C empfangenen Signals, kann der Kompaktsensor C überall dort eingesetzt werden, wo ein Rückwand-, Kolben- oder Molchecho empfangen werden kann. So ist es beispielsweise möglich, den Kompaktsensor C zur Grenzstandskontrolle an Tanks oder auch Molcherkennung in Rohren einzusetzen. Somit kann der Kompaktsensor C an allen Zylindern, wie beispielsweise Kolbenspeicher, Hydraulikzylinder, Rohren sonstige zylindrische Behälter, ausgelegt sein, um z.B. bei einem maximalen Außendurchmesser eines solchen Zylinders von beispielsweise 1500 mm eingesetzt werden zu können. Dabei wird der Kompaktsensor C mit Hilfe eines akustischen Koppelmittels, wie beispielsweise eines Spezialkoppelklebers, und einer Befestigungsschelle oder flexiblen Befestigungseinrichtungen, wie z.B. eine Federkopplung, an den Zylinder, Behälter oder Tank oder das Rohr montiert.

Der Kompaktsensor C erzeugt und empfängt Ultraschall nach dem Impuls-Echo-Verfahren. Die empfangenen Signale werden von einer integrierten Elektronik E, die in der Fig. 1 symbolisch durch einen Elektronikblock E dargestellt ist, verstärkt, gleichgerichtet und ausgewertet. Diese Elektronik E enthält, wie in der Fig. 2 in einem schematischen Schaltungsbild näher erläutert ist, eine Mikrocontrollereinheit 1, die sämtliche Abläufe und insbesondere die Impuls-Echo-Erzeugung durch einen Sender 2 steuert sowie mathematische Berechnungen während der Messung durchführt, den Sender 2 zum Anregen eines Ultraschallgebers oder -sensors 3, einen einstellbaren Verstärker 4, der das empfangene Ultraschallecho verstärkt, und zwar gemäß der Steuerung durch die Mikrocontrollereinheit 1, mit anschließendem Einweggleichrichter und/oder Hüllkurvengenerator, dem das vom Verstärker 4 verstärkte und ggf. vom Einweggleichrichter gleichgerichtete Signal zugeführt wird und der eine Hüllkurve dieses Signals erzeugt, und einem ADC (Analog-Digital-Konverter) 6, der das ggf. gleichgerichtete, analoge Signal der Hüllkurve in ein digitales Signal mit fester Bit-Länge umwandelt und der Mikrocontrollereinheit 1 zuführt. In der Mikrocontrollereinheit 1 wird ein Ergebnisvektor erzeugt, mit welchem alle notwendigen Berechnungen und Vergleiche mit einem Referenzecho stattfinden. Je nach dem Ergebnis der Vergleiche wird ein Signal an einen Ausgang 7 weiter gegeben, womit entsprechende Änderungen der Form des Ultraschallechos über einen Kabelanschluss F des Kompaktsensors C (siehe Fig. 1) signalisiert werden. Weiterhin enthält der Kompaktsensor C den bereits erwähnten Ultraschallgeber oder -sensor 3, der eine sandwichartig zwischen zwei Elektroden G und H liegende Piezokeramik K enthält. Zwischen der Elektronik D, insbesondere in Form des Elektronikblockes E, und dem Ultraschallgeber oder -sensor 3 ist eine akustische Bedämpfung L vorgesehen, und an der freien oder Anschlussseite des Kompaktsensors C ist die entsprechende Elektrode H noch mit einer Schutzschicht M abgedeckt und vor Beschädigungen geschützt.

Der Ultraschall wird mit Hilfe eines piezoelektrischen Wandlers (zwei Elektroden G und H und dazwischen liegende Piezokeramik K), der durch einen elektrischen Spannungsimpuls angeregt wird, mit einer Resonanzfrequenz z.B. zwischen 0,5 MHz und 10 MHz, insbesondere beispielsweise zwischen 0,5 MHz und 2 MHz erzeugt. Der erzeugte Ultraschall breitet sich, wie Fachleuten ohne weitere Erklärung und Darstellung bekannt ist, durch die Zylinderwand und durch das flüssige Medium im Zylinder aus, wird an der gegenüberliegenden Zylinderwand oder am Kolben oder Molch reflektiert und nach erneutem Passieren des Mediums und der Zylinderwand vom Kompaktsensor C empfangen, verstärkt, gleichgerichtet und ausgewertet. Durch die Gleichrichtung und den Einsatz weiterer Bauelemente der Elektronik D, nämlich den Hüllkurvengenerator 5, entsteht eine Hüllkurve des Echos, die dem ADC 6 zugeführt wird. Die Prinzipien der Ultraschallerzeugung und -ausbreitung sowie der Echoentstehung und -detektion sind Fachleuten ohne weiteres bekannt, so dass diesbezügliche Erläuterungen und zeichnerische Darstellung zur Verdeutlichung nicht erforderlich sind und daher weggelassen werden können.

Ausgewertet wird stets der Inhalt eines Erwartungsbereiches, dessen zeitlicher Abstand zum Sendeimpuls vom Zylinderinnendurchmesser abhängig ist und einmalig auf diesen fest eingestellt wird. Der Messbereich (0 µs - 100 ms, insbesondere beispielsweise 0 µs - 65000 µs) ist variabel einstellbar. Dazu werden die zeitliche Auflösung, mit der abgetastet wird, und die Verzögerung, ab wann abgetastet wird, ebenfalls voreingestellt.

Während der Messung wird ein Ergebnisvektor mit einer bestimmten, gleich bleibenden Länge (in Byte) erzeugt, der die Information über das empfangene, gleichgerichtete Signal der Hüllkurve innerhalb des eingestellten Messbereichs enthält.

Der gesamte, maximale Messbereich beträgt dabei 100 ms, insbesondere beispielsweise 65000 µs. In diesem Messbereich lässt sich der Erwartungsbereich z.B. in 1 µs Schritten verstellen, dies gilt sowohl für die Breite des Erwartungsbereichs als auch für die Entfernung des Erwartungsbereichs zum Sendeimpuls.

Die Voreinstellungen sind notwendig, um dem Sensor mitzuteilen, wo das Echo zu finden ist. Nach der Einstellung ist der Sensor C in der Lage, ohne menschlichen Einfluss alle Rückwandechos innerhalb des Erwartungsbereiches zu erkennen oder nicht zu erkennen.

Nachfolgend wird näher auf das Auswerteverfahren eingegangen.

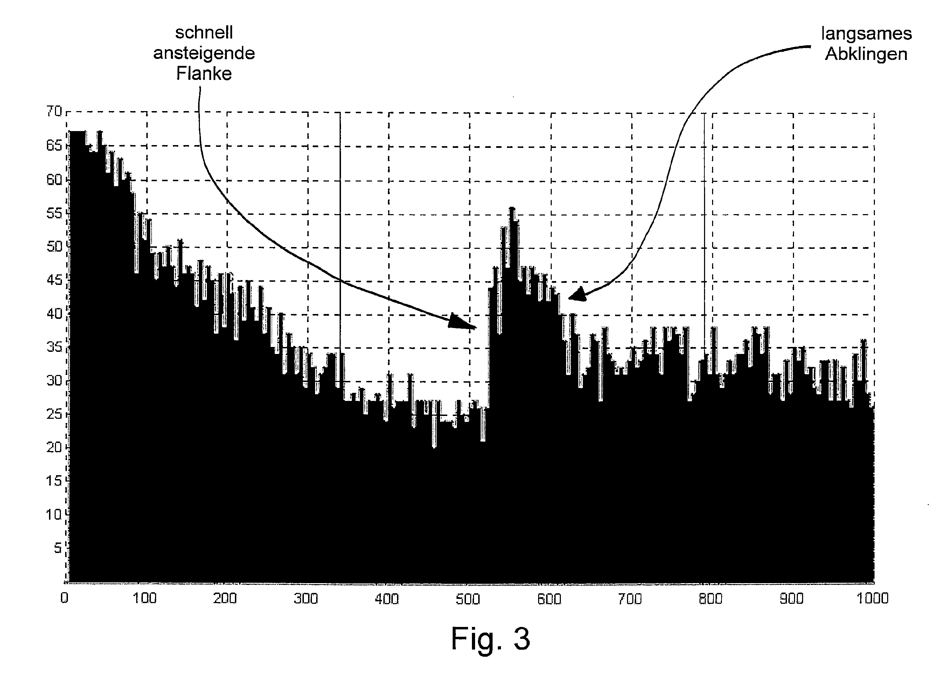

Bei der Auswertung wird eine immer wiederkehrende, charakteristische Form des empfangenen Ultraschallsignals ausgenutzt, wie sie nur bei Anwesenheit eines flüssigen Mediums im Zylinder auftritt, wozu in der Fig. 3 ein Beispiel dargestellt ist.

Die charakteristische Form bezieht sich ausschließlich auf das empfangene Rückwandecho oder Echo vom Kolben oder Molch innerhalb des eingestellten Erwartungsbereiches. Diese Form ist dadurch charakterisiert, dass das Echo eine schnell ansteigende Flanke und ein langsames Abklingen aufweist. Dies entspricht bei näherer Betrachtung der Form eines Dreiecks.

Während der Auswertung wird ein Referenzecho in Form eines Dreiecks erzeugt. Dieses stellt den Referenzvektor dar, dessen Breite abhängig vom Messbereich ist und einmalig festgelegt wird. Innerhalb des Erwartungsbereiches wird zur Ermittlung der größten Übereinstimmung zwischen beiden Vektoren eine Korrelation durchgeführt. Das Ergebnis wird mit weiteren statistischen Größen, wie insbesondere Standardabweichungen, verrechnet.

Das Endergebnis wird mit einem festen Schwellwert, wie z.B. einem Erfahrungswert, verglichen.

Bei einer Zustandsänderung verschwindet das Rückwand-, Kolben-oder Molchecho und somit die charakteristische Form des Ultraschallsignals. Die fehlende Übereinstimmung der Signalformen führt zu kleinen Werten im Endergebnis. Bei vorhandenem Rückwandecho liegt das Ergebnis üblicherweise über einem beispielhaften Wert von 30 (bei diesem Wert 30 handelt es sich um einen fiktiven Korrelationswert), bei fehlendem Rückwandecho unter einem dazu in Relation zu betrachtenden Wert von beispielsweise 14.

Die Erzeugung des Ergebnisvektors und die Berechnung des fiktiven Korrelationswertes findet kontinuierlich statt.

Eine Zustandsänderung z.B. eines Kolbens oder Molchs relativ zum Medium bewirkt das Aktivieren des Schaltausgangs. Dieser spricht beispielsweise einen Transistor an, der erst wieder schließt, wenn eine erneute Zustandsänderung von z.B. dem Medium relativ zum Kolben oder dessen Kolbenstange oder zum Molch stattgefunden hat.

Im Falle von auftretenden Luftblasen im Medium beispielsweise, werden diese erst dann signalisiert, wenn das Rückwandecho so stark gedämpft wird, dass der errechnete fiktive Korrelationswert des Erwartungsbereiches den Grenzwert für die unterschiedlichen Zustände unterschreitet.

Aufgrund der Bewertung des charakteristischen Ultraschallsignals beim Zustand "Medium" und der Veränderung beim Zustand "Kolben" oder "Molch", oder "Gas" oder "Kolbenstange", kann von einer indirekten Kolben- oder Molcherkennung gesprochen werden, da nur das an der Zylinderrückwand reflektierte Ultraschallsignal betrachtet wird und nicht die Reflexionen vom Kolben oder Molch selbst.

Daraus ergeben sich mehrere Vorteile der Erfindung.

Im Gegensatz zur Stand der Technik, wird das verstärkte Signal nicht mit einem voreingestellten Schwellwert verglichen, sondern dieses wird zunächst gleichgerichtet und anschließend die Hüllkurve dieses Signals erzeugt. Die Hüllkurve wird einem ADC zugeführt, der das Signal digitalisiert und an den Mikrocontroller weiterleitet, der einen Ergebnisvektor erzeugt, der die Information des Signals enthält. Mit Hilfe des Ergebnisvektors und des Referenzvektors wird eine Signalformerkennung oder Signalformbewertung durchgeführt. Der wesentliche Vorteil darin liegt in der Amplitudenunabhängigkeit, wodurch bisherige Verluste durch unzureichende Ankopplung oder stark dämpfende Medien nicht mehr ins Gewicht fallen. Aufgrund der Signalformbewertung und des Ausnutzens der charakteristischen Signalform, wie sie nur beim Zustand "Medium" zu sehen ist, spielt die Signalamplitude bei anderen Zuständen keine Rolle mehr, wodurch die Signaldynamik zwischen verschiedenen Zuständen völlig außer acht gelassen werden kann. In Verbindung mit dem Auswerteverfahren und dem Rückwand-, Kolben- oder Molchecho, wird somit eine sichere Unterscheidung zwischen verschiedenen Zuständen, auch an Zylindern oder Rohren mit dicker Wand, ohne Probleme möglich. Die oben erwähnten möglichen Ungenauigkeiten bei der Schallgeschwindigkeitsmessung treten hier nicht auf, da die Hüllkurve alle Halbwellen einbezieht, und die Form der Hüllkurve bewertet wird, unabhängig vom Pegel.

Der verwendete Sensor kann als Kompaktsensor ausgeführt sein und so ein einfaches, günstiges und genaues Kolben- oder Molcherkennungsgerät für eine berührungslose, indirekte Erkennung von Kolben in Kolbenspeichern oder Hydraulikzylindern sowie Molchen in Rohrleitungen, und Gerät zur Erkennung von Grenzständen in zylindrischen Tanks, Rohren und Behältern bilden. Das gute und genaue Messprinzip des Verfahrens (Impuls-Echo-Verfahrens) kann mit einer Messfrequenz von 0,5 MHz bis 10 MHz, insbesondere von 0,5 MHz bis 2 MHz eingesetzt werden. Der Sensor C wird außen an einer vorbestimmten Stelle am Zylinder, Rohr oder allgemein Behälter mit beispielsweise einer Schellenbefestigung oder flexiblen Befestigungseinrichtungen, wie z.B. eine Federkopplung, und einem akustischen Koppelmittel, wie insbesondere einem Spezialkoppelkleber, befestigt. Der Sensor C empfängt das reflektierte Rückwandecho von der gegenüber liegenden Zylinderwand oder das Echo von dem Kolben oder Molch und wertet dieses aus.

Zum Auswerten wird das reflektierte Signal innerhalb eines Zeitbereiches einer bestimmten Breite und Position ausgewertet. Der Zeitbereich ist im zeitlichen Abstand zum Sendeimpuls einstellbar in Abhängigkeit vom Zylinder- oder Behälterdurchmesser. Die Bewertung der Signalform und Berechnung eines Korrelationswertes erfolgt innerhalb des eingestellten Zeitbereiches unter zu Hilfenahme eines Referenzechos. Dabei werden unterschiedliche Ergebnisse für unterschiedliche Zustände erhalten. Anhand eines Grenzwertes ist somit eine eindeutige Unterscheidung der Zustände möglich. Durch die Bewertung der Signalform wird die Abhängigkeit von der Qualität der Ankopplung geringer.

Die Wandstärke des Behälters, Rohrs oder Zylinders kann vorzugsweise im Bereich von 1 - 50 mm liegen. Der Sensor enthält mit Vorzug einen einstellbaren Verstärker 4, einen Einweggleichrichter, einen Hüllkurvengenerator G und einen ADC 6. Der Verstärker 4 dient der Verstärkung des empfangenen Signals bei größeren Durchmessern oder stärker dämpfendem Medium. Der Einweggleichrichter erzeugt in Verbindung mit dem Hüllkurvengenerator 5 eine Hüllkurve und führt diese dem ADC 6 zu. Bei erreichtem Grenzstand oder Unterschreiten des Grenzwertes erzeugt der Sensor C als Mitteilungssignal ein Haltesignal am Ausgang 7 oder lässt es abfallen. Es ist grundsätzlich nur ein Sensor C zur Messung erforderlich. Alternativ können auch zwei Sensoren C gemeinsam eingesetzt werde, wobei beide miteinander zu synchronisieren sind.

In der Fig. 3 ist exemplarisch die Form eines Echosignals beim Zustand "Medium" dargestellt. Die Signalform des Echosignals zeigt deutlich eine schnell ansteigende Flanke und ein langsames Abklingen. Die schwarze Fläche stellt den Ultraschallpegel über der Zeit dar. Innerhalb des Erwartungsbereiches (gekennzeichnet durch die senkrechten Linien) ist ein Rückwandecho (wie es bei einem flüssigem Zustand zu erwarten ist) zu erkennen. Die charakteristische Form eines Dreiecks ist ebenfalls erkennbar.

Nachfolgend werden noch weitere Aspekte, Merkmale und Ausgestaltungen für Näherungsdetektoren und Näherungsdetektionsverfahren sowie deren Adaption insbesondere zur Verwendung an Rohren, aber nicht zwingend darauf beschränkt, und besondere Vorteile davon angegeben.

Der Näherungsdetektor und das entsprechende Näherungsdetektionsverfahren ermöglichen in vorteilhafter Weise eine Messung insbesondere mittels Ultraschall von außen ohne eine Öffnung im Rohr.

Vorzugsweise wird bei dem Näherungsdetektor und dem entsprechenden Näherungsdetektionsverfahren eine Sondenfrequenz von etwa 200 kHz bis ca. 5 MHz verwendet. Dieser Frequenzbereich liegt außerhalb der Frequenzen von passiver Detektionstechnik für z.B. Molche und hat vor allem den Vorteil der Trennung von Störgeräuschen.

Der Näherungsdetektor ist/wird mit einem Spezialkoppelklebstoff an den Behälter, wie insbesondere ein Rohr, angeklebt, so dass eine akustisch transparente, dauerhafte Verklebung erreicht wird. Als Spezialkoppelklebstoff wird vorzugsweise ein Silikonklebstoff verwendet.

Die Erkennung von z.B. Molchen erfolgt durch Auswertung des Rückwandechos einer Pipeline oder allgemein Rohres und von Echos vom zu detektierenden Körper, wie eben dem Molchkörper. Es wird das veränderte akustische Reflexionsverhalten des Molchkörpers (oder anderen Messkörpers) gegenüber dem Reflexionsverhalten der Rohrrückwand ausgenutzt.

Es erfolgt in vorteilhafter Weise eine kombinierte Auswertung der Form, Amplitude und Laufzeit des Ultraschallsignals, wozu geeignete mathematische Algorithmen eingesetzt werden.

Bevorzugt ist es, wenn eine automatische Abstimmung der Taktfrequenz von aufeinander folgenden einzelnen Messungen durch eine Steuerung, die als Software realisiert sein kann, durch Prüfung vorgegebener oder vorgebarer Kriterien erfolgt, insbesondere solche, die Störreflexe aus der Rohrwand und/oder von vorherigen Messungen ausblenden. Vorteilhafterweise haben der Näherungsdetektor und das entsprechende Näherungsdetektionsverfahren eine dynamisch einstellbare Taktrate. Die entsprechende Steuerung kann, wie schon erwähnt, insbesondere durch eine Software realisiert sein, wobei für deren Betrieb mit Vorteil ein ohnehin für die übrigen Rechenoperationen schon vorhandener oder genutzter Prozessor eingesetzt werden kann, so dass kein gesonderter Aufwand für die dynamische Einstellung der Taktrate erforderlich ist.

Insgesamt ist es ferner bevorzugt, wenn sich die gesamte Elektronik, die für den Näherungsdetektor und das entsprechende Näherungsdetektionsverfahren zum Einsatz kommen, im Näherungsdetektor selbst befindet, da dadurch Störsignale, wie sie durch (lange) Verbindungskabel zu bezüglich dem Näherungsdetektor externen Komponenten eingefangen werden können, verringert oder ganz vermieden werden können. Damit ist der daher als Kompaktsensor bezeichnete Näherungsdetektor besonders vorteilhaft.

Weiterhin kann vorgesehen sein, dass die Ultraschallimpulslaufzeit und Temperatur zur Kompensation von Schallgeschwindigkeitsänderungen beim Laufzeitverfahren gemessen und ausgewertet wird, und dass entsprechende Einrichtungen dazu enthalten sind. Damit kann ein besonders genaues und/oder universelles Gerät und Verfahren beispielsweise mit einer Eignung'auch zur Produkterkennung im Behälter oder Rohr geschaffen werden. Damit kann insbesondere eine Produkterkennung, inklusive Mischphasen, bei durch Molche getrennten verschiedenen Produkten realisiert werden. Vorteilhafterweise kann die Temperaturmessung unabhängig von der radialen Position durch einen eingebauten Metallring erfolgen.

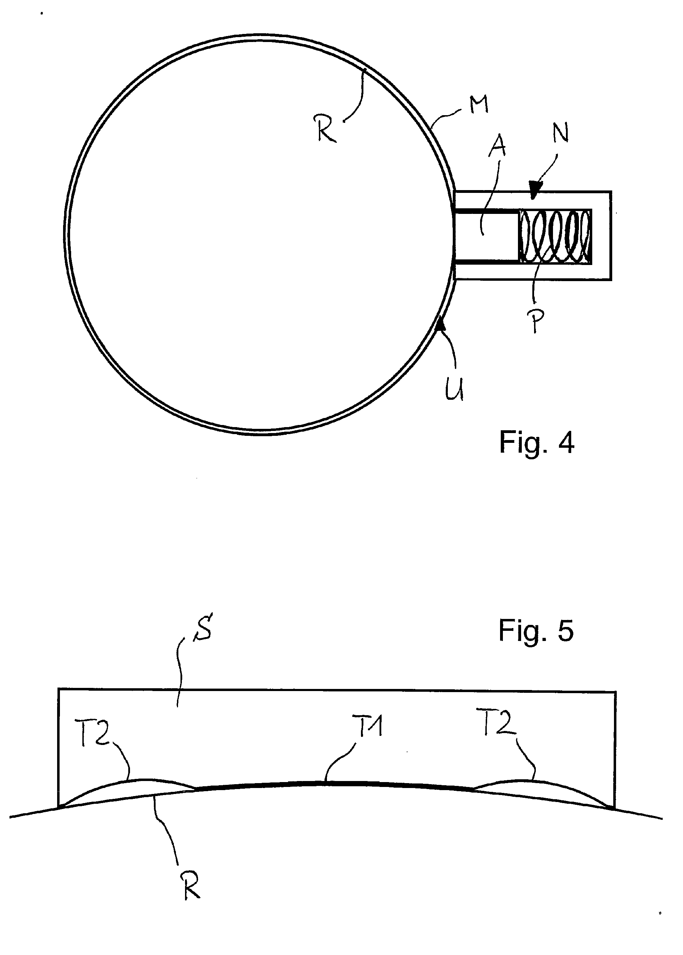

Eine Federankopplung N (siehe Fig. 4) und ein Überwurfring M zur Befestigung des Näherungsdetektors A schafft eine besondere Montagefreundlichkeit und eine reproduzierbare Ankopplung, die wiederum den Vorteil einer hohen Messgenauigkeit hat. Eine solche Federankopplung oder allgemein flexible Befestigungseinrichtungen N enthalten z.B. eine Spiralfeder P, mittels der der Näherungsdetektor A immer optimal gegen die Außenwand des Behälters R oder Rohrs gedrückt wird.

Vorzugsweise erfolgt die Positionierung des Näherungsdetektors senkrecht zur Längsachse des Rohrs, wie einer Pipeline, durch eine als "Prismenauflage" S gestaltete Befestigungsplatte (siehe Fig. 5), die zum Rohr R hin wenigstens zwei verschiedene Krümmungsabschnitte T1 und T2 hat, vorzugsweise einen ersten mittleren Krümmungsabschnitt T1 und beiderseits davon je einen zweiten äußeren Krümmungsabschnitt T2, wobei aber andere Kombinationen und Anzahlen von Krümmungsabschnitten möglich sind. Durch die Krümmungsabschnitte T1, T2 hat die Befestigungsplatte S dem Rohr R zugewandt gleichsam einen Art gekrümmt verlaufender Wellenform mit einer Mehrzahl von Auflageschenkeln entsprechend der Anzahl der Krümmungsabschnitte T1, T2. Eine derart gestaltete "wellenförmige" und in gewisser Weise auch prismatische Befestigungsplatte S ermöglicht nicht nur eine klare Justierung des Näherungsdetektors A senkrecht zur Längsachse des Rohrs R sondern auch automatisch eine zutreffende Ausrichtung des Näherungsdetektors A zu einem Molchkörper (nicht dargestellt).

Wenn eine Spezialfolie U (siehe Fig. 4) am Ort der Montage des Näherungsdetektors A um das Rohr R oder bei jeder anderen Anwendung um den Behälter gewickelt wird, bevor darüber der Näherungsdetektor A montiert wird, können störende Umlaufechos in der Wand des Behälters R oder Rohrs gedämpft werden, was zu einer Erhöhung der akustischen Signaldynamik und damit Verbesserung der Messgenauigkeit führt. Die Spezialfolie bildet somit eine externe Dämpfungslage U zwischen dem Behälter R und dem Näherungsdetektor A.

Der Näherungsdetektor ist ferner in vorteilhafter Weise für einen Betrieb im Temperaturbereich von etwa -40°C bis ca. +80°C ausgelegt. Weiterhin ist vorzugsweise vorgesehen, dass der Näherungsdetektor galvanisch komplett von dem Behälter, wie beispielsweise einer Pipeline, galvanisch getrennt ist.

Um die Baugröße des Näherungsdetektors möglichst klein zu halten, kann ein externes Programmiergerät vorgesehen werden, das für grundsätzliche Einstellungen und Programmierungen sowie für Anpassungen und Updates über eine geeignete und bekannte Datenleitung mit dem Näherungsdetektor verbunden werden kann.

Durch die Erfindung wird in Kombination einiger bevorzugten Versionen von Einzelmerkmalen somit insbesondere eine berührungslose Kompaktsensoreinheit zur indirekten Kolben- oder Molcherkennung oder Grenzstandskontrolle an Zylindern, Rohren oder Tanks geschaffen, welche außen am Zylinder, Rohr bzw. Tank montiert wird und keinen Kontakt zum Medium hat. Die vorzugsweise Kompaktsensoreinheit wird mittels Schellenbefestigung oder flexiblen Befestigungseinrichtungen, wie z.B. eine Federkopplung, und Spezialkoppelmittel am Zylinder, Rohr, Tank oder Behälter montiert. Weiterhin verfügt die Kompaktsensoreinheit über einen internen einstellbaren Verstärker mit anschließendem Hüllkurvengenerator und ADC, der das digitalisierte Ultraschallsignal einem Mikrocontroller zuführt. Der Mikrocontroller steuert zusätzlich alle Abläufe, unter anderem auch die Einstellung des Verstärkers. Für die Auswertung wird eine charakteristische Form des Ultraschallsignals ausgenutzt, wie sie nur bei der Anwesenheit von einer Flüssigkeit oder einem Molch oder Kolben entsteht. In Verbindung mit einem Referenzsignal kann die charakteristische Form des Ultraschallsignals identifiziert, d.h. eine Signalformerkennung durchgeführt werden. Durch die Signalformerkennung spielt die Qualität der Ankopplung eine untergeordnete Rolle, da sich bei minder Qualität der Ankopplung der Pegel verringert, die Form des Signals aber gleich bleibt. Bei einer Zustandsänderung und somit einer Signalformveränderung werden der Schaltausgang angesteuert und die Änderung signalisiert.

Die Erfindung ist anhand der Ausführungsbeispiele in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele und deren Darstellungen in der Zeichnung entnehmen und mit seinem fachmännischen Wissen sowie dem Stand der Technik kombinieren kann. Insbesondere sind alle einzelnen Merkmale und Ausgestaltungsmöglichkeiten der Erfindung und ihrer Ausführungsvarianten kombinierbar.

## Patentansprüche

1. Molcherkennungsvorrichtung (B), mit einem Näherungsdetektor (A), der einen Sensor (C) enthält, der zum Erzeugen und Empfangen von Ultraschall nach dem Impuls-Echo-Verfahren ausgelegt ist und dem eine Auswerteelektronik (D) zugeordnet ist,
wobei die Auswerteelektronik (D) Signalformerkennungseinrichtungen (Mikrocontrollereinheit 1) für Signalformen der Hüllkurven von empfangenen Ultraschallsignalen und Ausgabeeinrichtungen (Mikrocontrollereinheit 1, 7) enthält, um beim Auftreten einer vorgegebenen Signalform, beim Abweichen von einer vorgegebenen Signalform und/oder bei einer Änderung der Übereinstimmung mit oder des Abweichens von einer vorgegebenen Signalform ein Mitteilungssignal auszugeben.

2. Molcherkennungsvorrichtung (B) nach Anspruch 1,
**dadurch gekennzeichnet,**
**dass** die Signalformerkennungseinrichtungen enthält
einen Hüllkurvengenerator (5), mittels dem eine Signalform der Hüllkurve eines empfangenen Ultraschallsignals erzeugt wird, und
Vergleichseinrichtungen (Mikrocontrollereinheit 1), mittels denen die Signalform der Hüllkurve eines empfangenen Ultraschallsignals mit einer Referenz verglichen wird, und dass die Ausgabeeinrichtungen (Mikrocontrollereinheit 1, 7) ausgelegt sind, ein Mitteilungssignal auszugeben, wenn mittels der Vergleichseinrichtungen (Mikrocontrollereinheit 1) eine Übereinstimmung der Signalform der Hüllkurve eines empfangenen Ultraschallsignals mit der Referenz, eine Abweichung der Signalform der Hüllkurve eines empfangenen Ultraschallsignals von der Referenz oder eine Änderung des Unterschiedes zwischen der Signalform der Hüllkurve eines empfangenen Ultraschallsignals und der Referenz festgestellt wird.

3. Molcherkennungsvorrichtung (B) nach Anspruch 1 oder 2,
**dadurch gekennzeichnet,**
**dass** der Sensor als Kompaktsensoreinheit (C) zur Montage außen an einem Zylinder, Rohr, Tank oder Behälter ausgeführt ist und zum Einsatz ohne Kontakt zu einem Medium vorgesehen ist,
wobei vorzugsweise die Kompaktsensoreinheit (C) mittels Schellenbefestigung oder flexiblen Befestigungseinrichtungen und Spezialkoppelmittel an einem Zylinder, Rohr, Tank oder Behälter montierbar ist.

4. Molcherkennungsvorrichtung (B) nach einem der vorhergehenden Ansprüche,
**dadurch gekennzeichnet,**
**dass** der Sensor (C) zur indirekten Kolben- oder Molcherkennung und/oder zur Grenzstandskontrolle an einem Zylinder, Rohr oder Behälter oder an Tanks ausgelegt ist,
und/oder
**dass** der Sensor (C) und ggf. die Kompaktsensoreinheit (C) über einen internen einstellbaren Verstärker (4) mit anschließendem Hüllkurvengenerator (5) und ADC (6) verfügt, um davon die digitalisierte Signalform der Hüllkurve des Ultraschallsignals einem Mikrocontroller (1) zuzuführen,
wobei vorzugsweise der Mikrocontroller (1) ausgelegt ist, alle Abläufe und auch die Einstellung des Verstärkers (4) zu steuern, und/oder
**dass** die Signalformerkennungseinrichtungen und ggf. deren Vergleichseinrichtungen in einem Mikrocontroller (1) enthalten sind.

5. Molcherkennungsvorrichtung (B) nach einem der vorhergehenden Ansprüche,
**dadurch gekennzeichnet,**
**dass** die Signalformerkennungseinrichtungen (Mikrocontrollereinheit 1) und ggf. deren Vergleichseinrichtungen (Mikrocontrollereinheit 1) für die Auswertung der Signalform der Hüllkurve des empfangenen Ultraschallsignals und zum Erkennen einer charakteristischen Signalform der Hüllkurve des empfangenen Ultraschallsignals ausgelegt sind, welche Signalform der Hüllkurve des empfangenen Ultraschallsignals nur bei der Anwesenheit von einer Flüssigkeit entsteht, wobei vorzugsweise die Signalformerkennungseinrichtungen (Mikrocontrollereinheit 1) und ggf. deren Vergleichseinrichtungen (Mikrocontrollereinheit 1) ausgelegt sind, die charakteristische Signalform der Hüllkurve des Ultraschallsignals in Verbindung mit einem Referenzsignal zu identifizieren.

6. Molcherkennungsvorrichtung (B) nach einem der vorhergehenden Ansprüche,
**dadurch gekennzeichnet,**
**dass** die Auswerteelektronik (Mikrocontrollereinheit 1) ausgelegt ist, anhand einer Signalformveränderung eine Zustandsänderung zu detektieren und in Abhängigkeit davon einen Schaltausgang (7) anzusteuern, um die Änderung zu signalisieren.

7. Molcherkennungsverfahren, enthaltend ein Näherungsdetektionsverfahren, wobei mit einem Sensor (C) Ultraschall erzeugt und empfangen wird (z.B. nach dem Impuls-Echo-Verfahren), und
wobei die Signalform der Hüllkurven von empfangenen Ultraschallsignalen ermittelt und erkannt wird, und
wobei beim Auftreten einer vorgegebenen Signalform, beim Abweichen von einer vorgegebenen Signalform und/oder bei einer Änderung der Übereinstimmung mit oder des Abweichens von einer vorgegebenen Signalform ein Mitteilungssignal ausgegeben wird.

8. Molcherkennungsverfahren nach Anspruch 7,
**dadurch gekennzeichnet,**
**dass** die Signalformerkennung erfolgt mit
einem Hüllkurvengenerator (5), mittels dem eine Hüllkurve eines empfangenen Ultraschallsignals erzeugt wird, und Vergleichseinrichtungen (Mikrocontrollereinheit 1), mittels denen die Signalform der Hüllkurve eines empfangenen Ultraschallsignals mit einer Referenz verglichen wird, und dass ein Mitteilungssignal ausgegeben wird, wenn mittels der Vergleichseinrichtungen (Mikrocontrollereinheit 1) eine Übereinstimmung der Signalform der Hüllkurve eines empfangenen Ultraschallsignals mit der Referenz, eine Abweichung der Signalform der Hüllkurve eines empfangenen Ultraschallsignals von der Referenz oder eine Änderung des Unterschiedes zwischen der Signalform der Hüllkurve eines empfangenen Ultraschallsignals und der Referenz festgestellt wird.

9. Molcherkennungsverfahren nach Anspruch 7 oder 8,
**dadurch gekennzeichnet,**
**dass** der Sensor als Kompaktsensoreinheit (C) zur Montage außen an einem Zylinder, Rohr, Tank oder Behälter ausgeführt ist und zum Einsatz ohne Kontakt zu einem Medium vorgesehen ist,
wobei vorzugsweise die Kompaktsensoreinheit (C) mittels Schellenbefestigung oder flexiblen Befestigungseinrichtungen und Spezialkoppelmittel an einem Zylinder, Rohr, Tank oder Behälter montiert wird.

10. Molcherkennungsverfahren nach einem der Ansprüche 7 bis 9,
**dadurch gekennzeichnet,**
**dass** mittels des Sensors (C) eine indirekte Kolben- oder Molcherkennung und/oder eine Grenzstandskontrolle an einem Zylinder, Rohr oder Behälter oder an Tanks erfolgt,
und/oder
**dass** der Sensor (C) und ggf. die Kompaktsensoreinheit (C) über einen internen einstellbaren Verstärker (4) mit anschließendem Hüllkurvengenerator (5) und ADC (6) verfügt und davon das digitalisierte Ultraschallsignal einem Mikrocontroller (1) zuführt, wobei vorzugsweise der Mikrocontroller (1) alle Abläufe und auch die Einstellung des Verstärkers (4) steuert.

11. Näherungsdetektionsverfahren nach einem der Ansprüche 7 bis 10,
**dadurch gekennzeichnet,**
**dass** die Signalformerkennungseinrichtungen und ggf. deren Vergleichseinrichtungen in einem Mikrocontroller (1) enthalten sind, und/oder
**dass** die Auswertung der Signalform der Hüllkurve des empfangenen Ultraschallsignals und das Erkennen einer charakteristischen Signalform der Hüllkurve des empfangenen Ultraschallsignals mittels den Signalformerkennungseinrichtungen (Mikrocontrollereinheit 1) und ggf. deren Vergleichseinrichtungen (Mikrocontrollereinheit 1) erfolgt,
wobei vorzugsweise die Signalformerkennungseinrichtungen (Mikrocontrollereinheit 1) und ggf. deren Vergleichseinrichtungen (Mikrocontrollereinheit 1) ausgelegt sind, die charakteristische Signalform der Hüllkurve des Ultraschallsignals in Verbindung mit einem Referenzsignal zu identifizieren.

12. Molcherkennungsverfahren nach einem der Ansprüche 7 bis 11,
**dadurch gekennzeichnet,**
**dass** die Auswerteelektronik (Mikrocontrollereinheit 1) ausgelegt ist, anhand einer Signalformveränderung eine Zustandsänderung zu detektieren und in Abhängigkeit davon einen Schaltausgang (7) anzusteuern, um die Änderung zu signalisieren.
